# EUROPÄISCHE PATENTANMELDUNG

(11) **EP 3 540 909 A1**
(43) Veröffentlichungstag der Anmeldung: **18.09.2019**
(21) Anmeldenummer: 19162148.1
(22) Anmeldetag: 12.03.2019
(51) Int. Cl.: H02J 9/06, B23Q 1/00

(54) **VORRICHTUNG UND VERFAHREN ZUR UNTERBRECHUNGSFREIEN STROMVERSORGUNG**

(30) Priorität: 13.03.2018 DE 102018203763
(71) Anmelder: HOMAG GmbH, 72296 Schopfloch (DE)
(72) Erfinder: Johannsen, Heiko, 72160 Horb (DE)
(74) Vertreter: Hoffmann Eitle

(57) **Zusammenfassung**

Die vorliegende Erfindung bezieht sich auf eine Vorrichtung zur unterbrechungsfreien Stromversorgung, aufweisend: eine Maschinensteuerkomponente, die mittels einer Primärstromversorgung mit Strom versorgbar ist und eingerichtet ist, eine Maschine, insbesondere eine Bearbeitungsmaschine, zu steuern; ein Strom-Speichermedium zur Speicherung von Strom, welches mit der Maschinensteuerkomponente verbunden ist, dadurch gekennzeichnet, dass eine Steuereinrichtung, die so ausgestaltet ist, dass sie die Stromversorgung der Maschinensteuerkomponente kontinuierlich überwacht, im Falle einer erfassten Unterbrechung der Primärstromversorgung die Maschinensteuerkomponente mit Strom aus dem Strom-Speichermedium versorgt. Ferner wird ein Verfahren zur unterbrechungsfreien Stromversorgung offenbart.

## Beschreibung

### Technisches Gebiet

Die vorliegende Erfindung bezieht sich auf eine Vorrichtung und ein Verfahren zur unterbrechungsfreien Stromversorgung einer Maschine, insbesondere einer Bearbeitungsmaschine.

### Stand der Technik

Eine Vorrichtung zur unterbrechungsfreien Stromversorgung, oder kurz eine unterbrechungsfreie Stromversorgung (USV), wird allgemein eingesetzt, um bei Störungen im Stromnetz die Versorgung kritischer elektrischer Lasten störungsfrei sicherzustellen und wird daher in die Stromzuleitung der zu sichernden elektrischen Lasten (z.B. Anlagen oder Maschinen) eingefügt. Das heißt, die Vorrichtung zur unterbrechungsfreien Stromversorgung wird allgemein in einer Stromzuleitung zwischen dem Primärstromeingang und den zu versorgenden elektrischen Lasten zwischengeschaltet. Üblicherweise überwacht eine solche Vorrichtung den Primärstromeingang und erkennt diesbezüglich Störungen zum Beispiel in Form von Spannungsschwankungen oder Stromausfällen.

Bei Störungen am Primärstromeingang ist eine allgemein bekannte Vorrichtung zur unterbrechungsfreien Stromversorgung in der Lage zu entscheiden, wie fortgefahren werden soll, wobei im Rahmen von kurzen Stromausfällen oder Spannungsschwankungen (zum Beispiel unter 2 Minuten) die Stromversorgung häufig mittels einer in der USV enthaltenen Batterie weiter aufrecht erhalten wird und eine Meldung absetzt wird. Bei längeren Stromausfällen kann die allgemeine bekannte Vorrichtung zur unterbrechungsfreien Stromversorgung nach einem bestimmten Zeitraum die Stromversorgung durch die Batterie einstellen und damit die Maschine beziehungsweise die damit verbundenen elektrischen Komponenten abschalten. Hierbei kann es jedoch zu Datenverlusten kommen.

Ferner ist aus dem Stand der Technik eine sogenannte allgemeine Ersatzstromversorgung (AEV) bekannt, welche eine Stromversorgung für ausgewählte elektrische Lasten, Verbraucher oder Maschinenteile bei Ausfall einer allgemeinen Stromversorgung darstellt. Hierbei wird die Weiterversorgung solcher Komponenten von der AEV zum Beispiel in Form von Batterien oder Notstromaggregaten übernommen, wobei bisher die Umschaltung der Stromversorgung von Hand oder automatisch erfolgen kann. Mit anderen Worten, die Stromversorgung wird mittels der AEV nicht direkt überwacht und kann erst nach einer Umschaltung wieder aufrechterhalten werden. Dies ist jedoch nachteilig, da eine solche Umschaltung auf die AEV kurzzeitige Stromausfälle zur Folge hat und somit ein Risiko beispielsweise für eine Maschine und die damit verbundenen elektronischen Komponenten darstellt. Hierbei kommt es oftmals zur Korruption von Daten und Zwischenfällen in den elektrischen Komponenten.

Um solchen Problemen vorzubeugen, werden aktuell hauptsächlich Vorrichtungen zur unterbrechungsfreien Stromversorgung zum Beispiel in Krankenhäusern, IT-Zentren oder Serverräumen verwendet. Außerdem finden solche Vorrichtungen zur unterbrechungsfreien Stromversorgung Anwendung im Bereich der Bearbeitungsmaschinen, sodass insbesondere PCs, elektrische Regler, Sicherheitssteuerungen, sowie das Versorgungsnetz an Sensoren und Antriebsreglern geschützt werden kann.

Aus dem Stand der Technik geht beispielsweise aus der WO 2014/013655 A1 eine Vorrichtung hervor, die mit mehreren elektronischen Geräten, zum Beispiel, Computern, in Verbindung steht, um diese im Falle eines Stromausfalls mit Elektrizität zu versorgen. Weiterhin ist diese Vorrichtung darauf ausgelegt, nach einem Stromausfall zu prüfen, ob die Stromversorgung wiederhergestellt wurde. Dazu sendet die Vorrichtung einen Befehl zum Abschalten der Computer, falls nach einer gewissen Frist die Stromversorgung nicht wiederhergestellt wurde, wobei während des Stromausfalls die Computer durch eine unterbrechungsfreie Stromversorgung mit vorher akkumulierter Elektrizität versorgt worden sind.

Die US 2002/0069371 A1 lehrt eine Vorrichtung und ein Verfahrens, um eine Vielzahl von Computern mit Hilfe einer unterbrechungsfreien Stromversorgung zu überwachen. Das heißt, wenn hierbei eine Stromversorgung wegfällt, überprüft die Vorrichtung, ob es sich um einen tatsächlichen Stromausfall oder nicht etwa einen Fehler handelt. Anschließend sendet die Vorrichtung den angekoppelten Computern eine Warnung, sich auf das Abschalten vorzubereiten. Nachdem alle Computer einer Kontrolleinheit kommuniziert haben, dass sie bereit sind, wird ein Befehl zum Abschalten über die Computer gesendet. Im Anschluss an das Abschalten der Computer schaltet sich die Vorrichtung zur unterbrechungsfreien Stromversorgung ebenfalls ab.

Auch die WO 2013/056276 A2 offenbart eine Vorrichtung zur unterbrechungsfreien Stromversorgung, die an einen Computer angeschlossen wird und eine wieder aufladbare Batterie aufweist. Die Vorrichtung zur unterbrechungsfreien Stromversorgung wird an das Mainboard und die Stromversorgung eines Computers angeschlossen, wobei die USV im Normalbetrieb von der Stromversorgung des Computers versorgt wird. Bei einem Stromausfall bezieht die unterbrechungsfreie Stromversorgung Strom von seiner Batterie und stellt bei Wiederherstellung der Stromversorgung den Normalbetrieb wieder her. Während der Batterieversorgung des Rechners wird ein Befehl zum Abschalten des Computers gesendet, falls der Ladezustand der Batterie unter ein bestimmtes Niveau fällt.

Eine solche Ausgestaltung ist jedoch nachteilig, da lediglich der Batterieladezustand oder eine vordefinierte Frist zum Abschalten ausschlaggebend für ein Abschalten der elektrischen Steuerkomponenten ist.

Mit anderen Worten, das Abschalten der Vorrichtung zur unterbrechungsfreien Stromversorgung nach einer vorbestimmten Zeit oder einem bestimmte Batterieladezustand kann zu Problemen bei den angeschlossenen elektrischen Steuerkomponenten (zum Beispiel PCs, Sensoren, Speichermedien) führen, wenn diese zum Zeitpunkt des Abschaltens der unterbrechungsfreien Stromversorgung noch nicht vollständig abgeschaltet wurden. Ein abruptes Abschalten der unterbrechungsfreien Stromversorgung nach einer bestimmten Frist kann somit zur Zerstörung beziehungsweise der Korruption von Daten führen.

Außerdem führt eine vordefinierte Dauer, über welche die Vorrichtung zur unterbrechungsfreien Stromversorgung die angeschlossenen elektrischen Lasten mit Strom versorgt, dazu, dass die dafür nötigen Batterien länger entladen werden als eigentlich notwendig ist, was wiederum zu einer Verringerung der Lebensdauer der Batterien führt.

Ferner liegt die Steuerung einer bisher bekannten USV direkt auf den zu versorgenden elektrischen Steuerkomponenten (z.B. ein Computer von Bearbeitungsmaschinen). Dies führt dazu, dass die bisherige USV nicht gesteuert werden kann, wenn der Computer nicht mehr läuft.

### Darstellung der Erfindung

Es ist daher Aufgabe der vorliegenden Erfindung, eine Vorrichtung und ein Verfahren zur unterbrechungsfreien Stromversorgung vorzusehen, mit der die zuvor genannten Probleme zumindest teilweise behoben werden können, und/oder mit der die (Betriebs-)Zustände der zu versorgenden elektrischen Steuerkomponenten (Maschinensteuerkomponente) überwacht werden können, die Stromversorgung mittels der Vorrichtung zur unterbrechungsfreien Stromversorgung und dem entsprechenden Verfahren sicherer gestaltet werden kann, und die Lebensdauer der dafür benötigten Batterien erhöht werden kann.

Diese Aufgabe wird erfindungsgemäß durch eine Vorrichtung mit den Merkmalen von Anspruch 1, sowie einem Verfahren gemäß Anspruch 10 gelöst. Bevorzugte Ausgestaltungen finden sich in den Unteransprüchen, der folgenden Beschreibung und den Zeichnungen.

Gemäß einer Ausführungsform weist eine Vorrichtung zur unterbrechungsfreien Stromversorgung auf: eine Maschinensteuerkomponente, die mittels einer Primärstromversorgung mit Strom versorgbar ist und eingerichtet ist, eine Maschine, insbesondere eine Bearbeitungsmaschine zu steuern; ein Strom-Speichermedium zur Speicherung von Strom, welches mit der Maschinensteuerkomponente verbunden ist, und eine Steuereinrichtung, die so ausgestaltet ist, dass sie die Stromversorgung der Maschinensteuerkomponente kontinuierlich überwacht und im Falle einer erfassten Unterbrechung der Primärstromversorgung die Maschinensteuerkomponente mit Strom aus dem Stromspeichermedium versorgt.

Unter einer Maschinensteuerkomponente ist beispielsweise eine Recheneinheit, ein Computer, eine Sensorsteuerung, eine elektrische SPS-Steuerung oder dergleichen zu verstehen, welche besonders schadensanfällig bei Stromausfällen oder Spannungsschwankungen sind. Ferner ist die Maschinensteuerkomponente in der Lage, eine Bearbeitungsmaschine zu steuern, sodass der komplette oder ein Teil des Betriebs der Bearbeitungsmaschine mittels der Maschinensteuerkomponente gesteuert werden kann. Im Normalbetrieb ohne Stromausfällen oder Spannungsschwankungen, wird die Maschinensteuerungskomponente üblicherweise mittels der Primärstromversorgung, beispielsweise mit einer Spannung von 230 Volt, versorgt.

Das Stromspeichermedium zur Speicherung von Strom kann z.B. als eine Batterie, ein Akkumulator, oder ein Notstromaggregat verstanden werden. Andere Ausgestaltungen sind jedoch ebenfalls denkbar.

Die Steuereinrichtung stellt ein Management (eine Steuerung) der Vorrichtung zur unterbrechungsfreien Stromversorgung dar. Die Steuereinrichtung kann jedoch auch im Sinne einer Regeleinrichtung ausgestaltet sein, welche die Informationen der Maschinensteuerelemente überwacht und nachfolgend beschriebene Maßnahmen im Sinne einer Regelung durchführt. Diese ist in der Lage, die Stromversorgung der Maschinensteuerkomponente zu überwachen und steuert die Versorgung dieser Komponente mit Strom im Falle einer Unterbrechung oder einer mangelhaften Primärstromversorgung.

Gemäß einer solchen Ausgestaltung wird ein effizienter und sicherer Betrieb, beispielweise einer Bearbeitungsmaschine, auch bei Stromausfällen oder Spannungsschwankungen sichergestellt. Ferner kann auf Störungen in der Stromversorgung reagiert werden, ohne dass ein Risiko für die elektrische Maschinensteuerkomponente der Bearbeitungsmaschine auftritt.

Die unterbrechungsfreie Stromversorgung wird also nicht durch eine vorbestimmte Frist gesteuert sondern beruht auf einer Steuerung der Maschinensteuerkomponente mittels eines definierten Zustands beziehungsweise der Überwachung des Zustands der Maschinensteuerkomponente. Das heißt, gemäß der vorliegenden Ausführungsform wird die Maschinensteuerkomponente solange mit Strom versorgt, bis sich ein Zustand (z.B. Computer läuft) der Maschinensteuerkomponente hin zu einem anderen Zustand (z.B. Computer ist ausgestaltet) verändert hat. Kurzum, der Erfindung liegt der Gedanke zugrunde, die Stromversorgung einer Maschinensteuerkomponente solange aufrecht zu erhalten, bis ein bestimmter Zustand erreicht ist.

Eine solche Überwachung der Zustände (Betriebszustände) der Maschinensteuerkomponente ermöglicht, dass eine Stromversorgung sicherer gestaltet werden kann. Ferner birgt die oben beschriebene Ausgestaltung den Vorteil, dass die Abläufe in der Steuereinrichtung durch die Überwachung der Maschinensteuerkomponente verkürzt werden können. Insbesondere wird hier nicht mehr ein vorbestimmter Zeitraum abgewartet, sondern bestimmte Prozesse können in der Steuereinrichtung sofort durchgeführt werden, sobald eine bestimmte Bedingung hierfür erfüllt ist.

Des Weiteren führt eine zustandsbedingte Steuerung der USV dazu, dass die Lebensdauer der verwendeten Batterien in der USV erhöht werden kann, da die Batterien bei Spannungsschwankungen oder Stromausfällen nur noch so lange wie nötig entladen werden. Eine tiefere, übermäßige und unnötige Entladung der Batterie kann somit vermieden werden.

Bevorzugt ist, dass die Steuereinrichtung so ausgestaltet ist, dass sie im Falle einer erfassten Unterbrechung der Primärstromversorgung einen Betriebszustand der Maschinensteuerkomponente überwacht und diese dem Betriebszustand entsprechend deaktiviert.

Gemäß einer solchen Ausgestaltung ist es neben den oben beschrieben Ausführungen möglich, dass die Maschinensteuerkomponente (zum Beispiel PCs) kontrolliert abgeschalten werden können, und der Stromausfall oder Spannungsschwankungen keinen Einfluss auf die bevorzugt elektrische Maschinensteuerkomponente haben. Neben einer weiteren Verbesserung der Sicherheit der Vorrichtung zur unterbrechungsfreien Stromversorgung führt dies außerdem dazu, dass die Daten der Maschinensteuerkomponenten und die entsprechenden Festplatten besser gegen Defekte abgesichert und ein Crash der Software der Maschinensteuerkomponente oder ein Datenverlust verhindert werden kann.

Bevorzugt ist, dass die Steuereinrichtung der USV intern oder extern an der Maschine vorgesehen ist.

Gemäß einer solchen Ausgestaltung ist es möglich, dass die Steuereinrichtung bei einer internen Ausgestaltung an der Maschine, mit kompakten Ausmaßen ausgestaltet sein kann, und somit besonders bei einer kompakten Bauweise keinen zusätzlichen Platz benötigt. Eine externe Ausgestaltung der Steuereinrichtung an der Maschine ermöglicht eine leichte Zugänglichkeit und eine vereinfachte Wartung.

Gemäß einem weiteren Aspekt erfolgt die Verbindung und Überwachung zwischen der Steuereinrichtung und der Maschinensteuerkomponente der Maschine via USB und/oder einer Spannungsabfrage des USB und/oder mittels Ethernet und/oder über einen Dienst, der auf der Maschinensteuerkomponente gespeichert ist.

Dies birgt den Vorteil, dass die Steuereinrichtung die Zustände der Maschinensteuerkomponente einfach und kostengünstig überwachen kann. Beispielsweise können über ein auf der Maschinensteuerkomponente installiertes Programm Informationen bezüglich des Zustands der Maschinensteuerkomponente einfach übertragen werden.

Gemäß einem weiteren Aspekt weist die Maschinensteuerkomponente PCs, Steuerungen und Sicherheitssteuerungen der Maschine auf.

Dies birgt den Vorteil, dass neben der Weiterversorgung der Steuerung der Maschine selbst, auch die Sicherheitsvorkehrungen intakt bleiben können, und somit das Verletzungsrisiko für Bediener einer Maschine reduziert werden können.

Gemäß einem weiteren Aspekt weist die Maschinensteuerkomponente zusätzlich ein Versorgungsnetz von Sensoren und/oder Antriebsreglern der Maschine auf.

Dies birgt den Vorteil, dass bei Spannungsschwankungen oder Stromausfällen eine Beeinträchtigung der Sensorik an der Maschine oder eine Zerstörung der Maschine beziehungsweise der verwendeten Werkzeuge in der Maschine verhindert werden kann. Des Weiteren kann durch die Weiterversorgung der Antriebsregler der Maschine sichergestellt werden, dass beispielsweise Spindel kontrolliert austrudeln können.

Gemäß einem weiteren Aspekt ist die Steuereinrichtung so ausgestaltet, dass sie eine Vielzahl von Maschinensteuerkomponenten einer oder mehreren Maschinen steuert.

Dies birgt den Vorteil, dass durch eine einzige Steuereinrichtung, die verschiedenen Zustände (Betriebszustände) von Maschinensteuerkomponenten (PCs, Rechner, etc.) einer oder mehrerer Maschinen überwacht werden können. Durch eine solche Ausgestaltung ist es ferner möglich, die jeweiligen Maschinensteuerkomponenten zum Beispiel gleichzeitig abgeschalten, wenn alle Maschinensteuerkomponenten übermitteln, dass ein bestimmter Betriebszustand erreicht worden ist. Ferner ist durch eine solche Ausgestaltung sichergestellt, dass keine übermäßigen Kosten durch eine solche Steuereinrichtung verursacht werden und die verbesserte Absicherung der Maschine durch die Vorrichtung zur unterbrechungsfreien Stromversorgung, kostengünstig erreicht werden kann.

Gemäß einem weiteren Aspekt ist das Stromspeichermedium mit der Maschinensteuerkomponente und der Maschine verbunden.

Dies birgt den Vorteil, dass im Falle von Spannungsschwankungen oder Stromausfällen erreicht werden kann, dass beispielsweise sich noch in der Maschine befindliche Bauteile, auch in einem solchen Falle sicher aus der Maschine befördert werden können. Das heißt, ein kontrolliertes "Auslaufen" der Maschine wird sichergestellt, wobei die dafür nötige Energie aus dem Strom-Speichermedium der USV bereitgestellt wird. Außerdem ist es möglich, dass zunächst die Maschine selbst kontrolliert abgeschaltet wird, und anschließend die Maschinensteuerkomponente der Maschine mittels der Steuereinrichtung in Abhängigkeit eines Betriebszustands der Maschinensteuerkomponente abgeschaltet wird.

Die vorliegende Erfindung umfasst ferner ein Verfahren zur unterbrechungsfreien Stromversorgung mit den folgenden Schritten: Überwachen einer Stromversorgung einer Maschinensteuerkomponente, die eingerichtet ist, eine Maschine, insbesondere eine Bearbeitungsmaschine zu steuern; Versorgen der Maschinensteuerkomponente mit Strom aus einem Strom-Speichermedium, falls beim Überwachen der Stromversorgung eine Störung erfasst wird; Überprüfen eines Betriebszustands der Maschinensteuerkomponente, falls beim Überwachen der Stromversorgung eine Störung erfasst wird; Deaktivieren der Maschinensteuerkomponente, falls das Überprüfen des Betriebszustands der Maschinensteuerkomponente ergibt, dass diese aktiv ist.

Dadurch ist es, vergleichbar mit der zuvor beschriebenen Vorrichtung, möglich, dass in Abhängigkeit der Zustände der Maschinensteuerkomponente eine sichere Stromversorgung sichergestellt werden kann, ohne dass die Maschinensteuerkomponente dem Risiko von Datenverlusten, oder Beeinträchtigungen durch einen Stromausfall oder Spannungsschwankungen ausgesetzt wird. Des Weiteren ist es durch eine solche Ausgestaltung möglich, die Lebensdauer des hierfür benötigten Strom-Speichermediums zu verbessern, da dieses Element nur solange Strom bereitstellen muss, bis eine Maschinensteuerkomponente erfolgreich deaktiviert oder abgeschaltet worden ist. Somit muss die Batterie nicht länger als benötigt entladen werden.

Ferner kann durch den Effekt, dass die Intelligenz nicht auf der Maschinensteuerkomponente, sondern in der Steuereinrichtung liegt, über das komplette Verfahren hinweg, der Betriebszustand der Maschinensteuerkomponente überwacht werden und eine sichere Stromversorgung dieser Komponente sichergestellt werden. Dies gilt auch wenn die Maschinensteuerkomponente bereits deaktiviert oder abgeschaltet ist.

Ein solches Verfahren ermöglicht außerdem, dass beispielsweise der Schritt des Abschaltens einer Maschinensteuerkomponente nicht mehr notwendig ist, da im Falle einer bewussten gesamten Abschaltung der Maschine, beispielsweise über einen Hauptschalter, die Maschinensteuerkomponente mittels des Verfahrens zur unterbrechungsfreien Stromversorgung deaktiviert werden kann, ohne die Maschinensteuerkomponente zu gefährden. Das heißt, man muss die Maschinensteuerkomponente oder mehrere Maschinensteuerkomponenten, die von der Steuereinrichtung gesteuert wird/werden, nicht mehr separat abschalten, da dies durch die Schritte des Verfahrens beziehungsweise die oben beschriebene Steuereinrichtung dementsprechend durchgeführt wird.

Dem erfindungsgemäßen Verfahren liegt also der Gedanke zugrunde, einerseits eine Stromversorgung der Maschinensteuerkomponente abhängig von einem Zustand dieser Komponente zu steuern und andererseits, die Intelligenz des Verfahrens zur unterbrechungsfreien Stromversorgung von einer Maschinensteuerkomponente zu einer Steuereinrichtung, welche das Verfahren durchführen kann, zu übertragen.

Gemäß einem weiteren Aspekt des Verfahrens zur unterbrechungsfreien Stromversorgung weist dieses Verfahren im Fall, dass das Überprüfen des Betriebszustands der Maschinensteuerkomponente ergibt, dass diese aktiv ist, ferner die folgenden Schritte vor dem Schritt des Deaktivierens der Maschinensteuerkomponente auf: Aussenden eines Warnsignals an die Maschinensteuerkomponente; Warten auf eine Antwort der Maschinensteuerkomponente für eine vorbestimmte Zeitdauer; Überprüfen des Betriebszustands der Maschinensteuerkomponente nach Ablauf der vorbestimmten Zeitdauer ohne Antwort von der Maschinensteuerkomponente; Deaktivieren der Maschinensteuerkomponente, falls das Überprüfen des Betriebszustands der Maschinensteuerkomponente ergibt, dass diese aktiv ist.

Dies birgt den Vorteil, dass beispielsweise bei kurzzeitigen Stromausfällen, einem Bediener der Maschine die Möglichkeit gegeben werden kann, ein Deaktivieren der Maschinensteuerkomponente zu verhindern, beziehungsweise temporär auszusetzen. Das heißt, der Maschinensteuerkomponente wird weiterhin durch die Eingabe eines Bedieners Strom zugeführt und keine Deaktivierung der Maschinensteuerkomponente veranlasst, wohingegen im Fall dass keine weitere Eingabe erfolgt und eine vorbestimmte Zeitdauer verstrichen ist, die Maschinensteuerkomponente sicher und kontrolliert deaktiviert werden kann.

Das heißt, ein vorzeitiges unerwünschtes Deaktivieren der Maschinensteuerkomponente mit einem potentiellen verbundenen Datenverlust wird verhindert, wohingegen bei einem Ausbleiben eines Befehls zur Aufrechterhaltung der Stromversorgung der Maschinensteuerkomponente diese sicher und ohne Risiko für die elektrischen Komponenten der Maschinensteuerkomponente abgeschaltet werden kann.

Gemäß einem weiteren Aspekt des Verfahrens zur unterbrechungsfreien Stromversorgung wird nach dem Deaktivieren der Maschinensteuerkomponente eine Steuervorrichtung, welche die zuvor beschriebenen Schritte steuert, deaktiviert.

Somit kann beispielsweise im Falle einer erfolgreichen kontrollierten Deaktivierung der Maschinensteuerkomponente auch die Steuereinrichtung vollständig deaktiviert werden. Somit ist die gesamte Vorrichtung zur unterbrechungsfreien Stromversorgung und die dadurch geschützte Maschine vollständig deaktiviert. Eine weitere Stromversorgung ist nicht notwendig.

Das heißt, die Vorrichtung zur unterbrechungsfreien Stromversorgung, die Einzelkomponenten, oder ein Teil einer Maschine muss nicht mehr mit Strom versorgt werden und kann vollkommen stromlos geschaltet werden. Neben einer einfachen Energieersparnis kann aus feuerversicherungstechnischen Gründen ein beispielsweise vergünstigter Versicherungstarif erzielt werden, da die Maschine stromlos geschaltet werden kann. Dies mindert außerdem das Risiko von Zwischenfällen, zum Beispiel über Nacht oder über Wochenenden, wenn keine Bediener in der Nähe der Maschine sind.

Gemäß einer solchen Ausgestaltung und aller vorhergehenden beschriebenen Aspekte ist es also möglich, dass die Steuereinrichtung der Vorrichtung zur unterbrechungsfreien Stromversorgung, welche die vorstehenden Verfahrensschritte ausführt, immer aktiv ist, sobald die Vorrichtung zur unterbrechungsfreien Stromversorgung betrieben wird.

### Kurze Beschreibung der Zeichnungen

Nachfolgend werden anhand schematischer Zeichnungen eine Vorrichtung und ein Verfahren zur unterbrechungsfreien Stromversorgung gemäß einer beispielhaften Ausführungsform dargestellt. Generelle Beispiele solcher Vorrichtungen und Verfahren werden beispielsweise in Bearbeitungsvorrichtungen zur Durchführung einer Bearbeitung von Werkstücken, die bevorzugt zumindest abschnittsweise aus Holz, Holzwerkstücken, Kunststoff oder dergleichen bestehen, angewendet. Weitere in diesem Zusammenhang genannte Modifikationen bestimmter Einzelmerkmale können jeweils einzeln miteinander kombiniert werden, um neue Ausführungsformen zu zeigen. Es zeigen:
Figur 1: eine schematische Darstellung einer Vorrichtung zur unterbrechungsfreien Stromversorgung mit einer externen Steuereinrichtung;
Figur 2: eine schematische Darstellung einer Vorrichtung zur unterbrechungsfreien Stromversorgung mit einer integrierten Steuereinrichtung;
Figur 3: eine schematische Darstellung eines Flussdiagramms des Verfahrens zur unterbrechungsfreien Stromversorgung.

### Detaillierte Beschreibung der Ausführungsformen

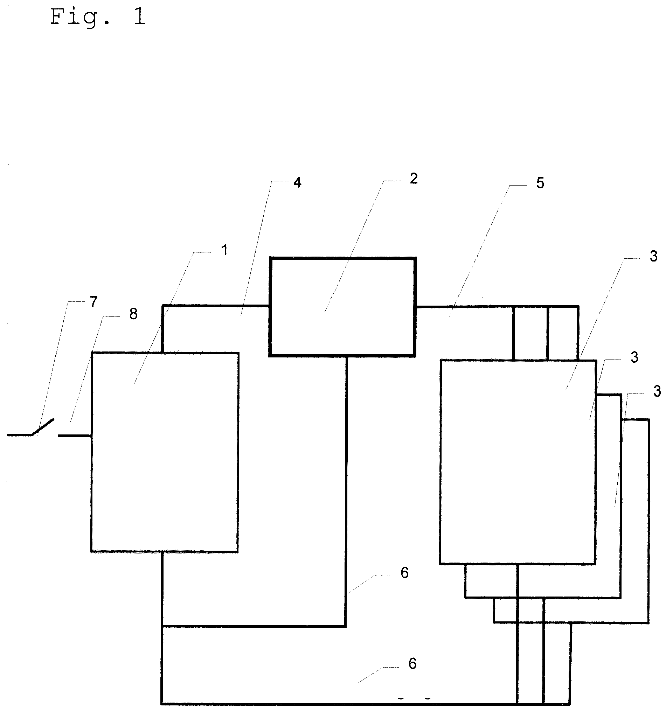

Die in Figur 1 gezeigte beispielhafte Ausführungsform einer Vorrichtung zur unterbrechungsfreien Stromversorgung mit einer externen Steuereinrichtung 2 umfasst neben der Steuereinrichtung 2 eine Batterie (ein Strom-Speichermedium) 1 sowie eine Vielzahl von Maschinensteuerkomponenten, hier in Form von drei PCs 3. Ferner zeigt die in Figur 1 dargestellte Ausführungsform mit einer externen Steuereinrichtung 2 eine Datenverbindung 4 zwischen der Batterie 1 und der Steuereinrichtung 2. Des Weiteren ist die Steuereinrichtung 2 mittels einer Datenverbindung 5 mit den drei PCs 3 verbunden. Hierbei können die Datenverbindung 4 und 5 jeweils Daten sowohl zur Steuereinrichtung 2 hin, als auch von dieser weg übertragen. Des Weiteren weist die Vorrichtung zur unterbrechungsfreien Stromversorgung gemäß Figur 1 eine Stromzuleitung 6 von der Batterie 1 an die Steuereinrichtung 2 und an die Vielzahl von PCs 3 auf. Das heißt, die PCs 3 und die externe Steuereinrichtung 3 werden unmittelbar von der Batterie 1 gespeist.

Des Weiteren ist eine Primärstromversorgung 7 mit einem Hauptschalter 8 in Figur 1 dargestellt, welche direkt mit der Batterie 1 verbunden ist und diese dauerhaft im störungsfreien Betrieb mit Strom speist. Wie aus Figur 1 ersichtlich ist, wird die Steuereinrichtung 2 also im Normalbetrieb mittels der Stromzuleitung 6, die wiederum über die Batterie 1 mit der Primärstromversorgung 7 verbunden ist, mit Strom versorgt und kann mittels der Datenverbindungen 4 und 5 Daten zwischen der Batterie 1 und der Vielzahl an PCs 3 austauschen.

Das heißt, gemäß der vorliegenden Ausführungsform in Figur 1 ist die Steuereinrichtung 2 für die Steuerung der Stromversorgung der PCs 3 aus der Batterie 1 verantwortlich und überwacht deren Zustände kontinuierlich.

Das heißt, die Steuervorrichtung 2 erkennt, wenn an der Primärstromversorgung 7, die an der Batterie 1 anliegt, eine Störung vorliegt, und erkennt, dass die normale Stromversorgung somit nicht gegeben ist. Das heißt, die Steuervorrichtung 2 überwacht dauerhaft den Stromeingang an der Batterie 1 durch die Primärstromversorgung 7 und ermöglicht, dass im Falle einer erfassten Störung, die Stromversorgung aus der Batterie 1 für die PCs 3 sichergestellt wird.

In der beispielhaften Ausführungsform ist die Steuereinrichtung 2 als SPS-Steuerung zu verstehen. In einer weiteren nicht dargestellten Ausführungsform kann die Steuereinrichtung 2 jedoch auch als eigener Computer (PC), oder als einfaches Schaltmodul, das wie in Figur 1 gezeigt, verbunden ist, verstanden werden. Weitere Ausgestaltungen der Steuereinrichtung 2 sind ebenfalls denkbar, solange diese Steuereinrichtung 2 in der Lage ist, die Stromversorgung durch die Primärstromversorgung 7 zu überwachen, und im Falle einer erfassten Unterbrechung der Stromversorgung die Batterie 1 so steuert, dass die PCs 3 mit Strom versorgt werden können. Im Störfall überwacht die Steuereinrichtung 2 hierbei dauerhaft, welchen Zustand der PC gerade aufweist und reagiert dementsprechend um ein sicheres Deaktivieren der PCs, was nachfolgenden noch genauer beschrieben wird, zu realisieren.

Unter dem PC 3 ist eine elektrische Steuerung beispielsweise einer Bearbeitungsmaschine zu verstehen. Das heißt, der PC 3 beinhaltet beispielsweise eine Steuerungssoftware einer Maschine, insbesondere einer Bearbeitungsmaschine, und steuert somit bestimmte Werkzeuge, Bearbeitungsprogramme, Sicherheitsvorkehrungen und Bearbeitungsschritte der Maschine. Ferner kann der PC 3 so ausgestaltet sein, dass er Daten von verschiedenen Messeinrichtungen (Sensoren) einer zu steuernden Maschine erfassen und verarbeiten kann und eine Betriebssoftware dementsprechend anpassen kann. Mit anderen Worten, der PC 3 ist für den eigentlichen Betrieb der Maschine zuständig.

In der in Figur 1 gezeigten Ausführungsform sind drei PCs 3 dargestellt. Es kann jedoch auch, ohne vom Umfang der Erfindung abzuweichen, jede beliebige andere Anzahl an PCs vorgesehen sein. Auch wird in der in Figur 1 gezeigten Ausführungsform der Vorrichtung zur unterbrechungsfreien Stromversorgung eine Steuereinrichtung 2 gezeigt, die mittels der Datenverbindung 5 mit der Vielzahl an PCs verbunden ist. Diese Ausführungsform ist jedoch nicht darauf beschränkt und es können auch mehrere separate Steuereinrichtungen 2 für jeweils einen PC 3 vorgesehen sein.

Unabhängig davon ist in der in Figur 1 gezeigten Ausführungsform jeder PCs 3 über die Stromzuleitung 6 mit der Batterie 1 und der Primärstromversorgung 7 verbunden.

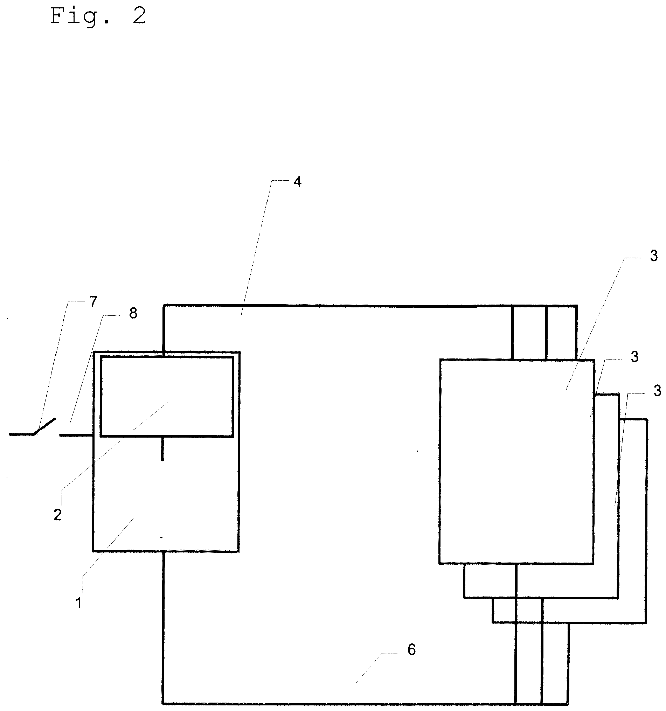

Auch aus Figur 2 geht eine vergleichbare Vorrichtung zur unterbrechungsfreien Stromversorgung mit einer Batterie 1, einer Steuereinrichtung 2, drei PCs 3, einer Datenverbindung 4 zwischen der Steuereinrichtung 2 und der PCs 3 und einer Stromzuleitung 6 von der Batterie 1 zu den PCs 3 hervor, wobei die Batterie 1 ebenfalls von der Primärstromversorgung 7 mit Strom gespeist wird.

Die in Figur 2 gezeigte Ausführungsform unterscheidet sich von der Ausführungsform aus Figur 1 dahingehend, dass die Steuereinrichtung 2 ohne zusätzliche Steuerungshardware ausgestaltet ist. Das bedeutet, in der in Figur 2 gezeigten Ausführungsform ist die Vorrichtung zur unterbrechungsfreien Stromversorgung mit einer internen mit der Batterie 1 bzw. deren Steuerung direkt verbundenen Steuerungseinrichtung 2 dargestellt. Das heißt, die Steuereinrichtung 2 ist direkt an der Batterie und deren Steuerung vorgesehen und überwacht die an der Batterie 1 angeschlossene Primärstromversorgung 7 und hält im Falle einer Störung der Primärstromversorgung 7 die Stromversorgung der angeschlossenen PCs 3 durch eine entsprechende Aktivierung und Steuerung der Batterie 1 aufrecht und überwacht (wie später beschrieben) die Zustände der PCs 3.

Für die verbleibenden Elemente aus Figur 2 mit denselben Bezugszeichen wie in Figur 1, wird eine weitere Erklärung weggelassen, um Redundanz zu vermeiden.

Nachfolgend soll nun auf die Funktionsweise der Vorrichtung zur unterbrechungsfreien Stromversorgung eingegangen werden.

Generell liegt der Erfindung der Gedanke zugrunde, dass die Betriebssicherheit von PCs 3 zum Beispiel in Maschinen erheblich erhöht werden kann, wenn der Übergang der PCs 3 von einem definierten Zustand in einen anderen Zustand auch bei Störungen in der Primärstromversorgung 7 sicher gewährleistet werden kann. Beispiele hierfür sind das Abschalten oder das Speichern bestimmter Daten vor dem Abschalten eines PCs 3. Die hierfür nötige Intelligenz in Form der beschriebenen Steuereinrichtung 2 befindet sich auf einer externen oder internen Steuerung und nicht wie üblich bei den PCs 3, welche eine Bearbeitungsmaschine steuern, sodass die Steuereinrichtung 2 auch ohne die angeschlossenen PCs 3 funktionieren kann.

Der Steuereinrichtung 2 liegt hierbei zugrunde, dass sie wiederholend/alternierend in bestimmten Zeitabständen die Zustände an der Primärstromversorgung 7, die mit der Batterie 1 verbunden ist, sowie die Zustände der PCs 3 bei Störfällen wiederholend/alternierend in bestimmten Zeitabständen abfragt und dementsprechende Befehle an die PCs 3 und die Batterie 1 weitergibt.

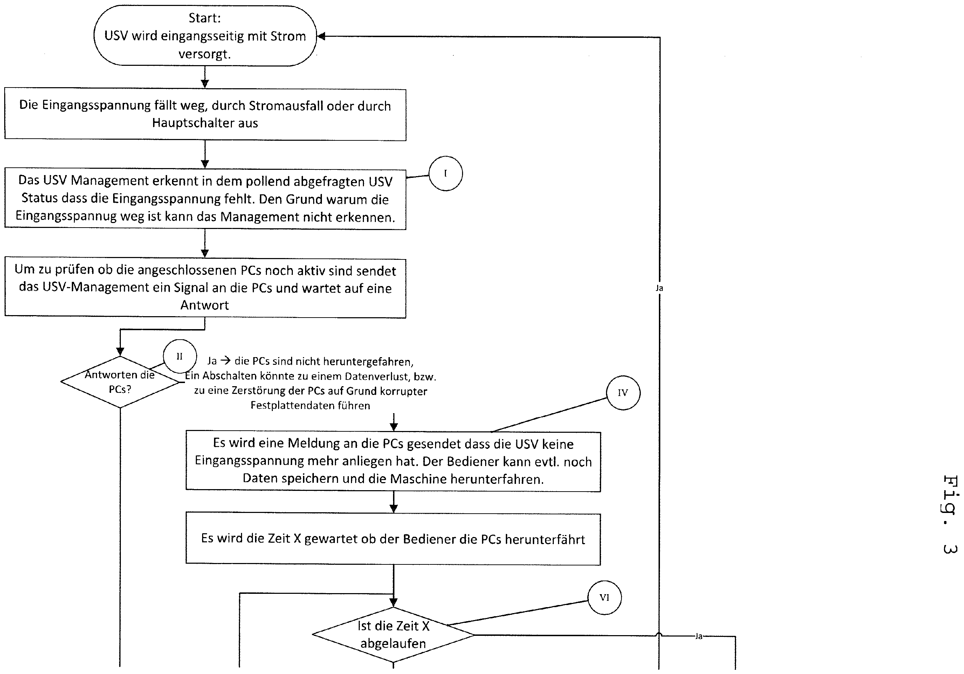

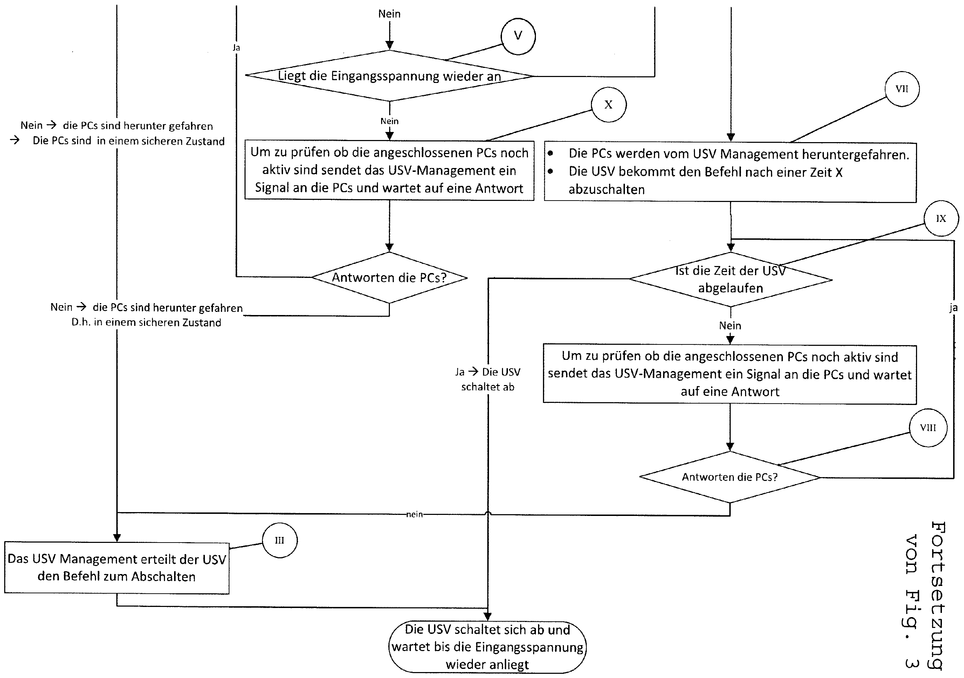

Das hierbei zugrunde liegende Verfahren, um die PCs 3 auch im Falle eines Stromausfalls oder von Spannungsschwankungen ordnungsgemäß abzuschalten, soll nun unter Bezugnahme auf Figur 3 genauer erläutert werden.

In einer in Figur 3 als Flussdiagramm dargestellten beispielhaften Ausführungsform des Verfahrens zur unterbrechungsfreien Stromversorgung findet die störungsfreie Stromversorgung und sichere Abschaltung der PCs 3 mit dem folgenden Ablaufschema statt.

Wenn eingangsseitig an der Primärstromversorgung 7 der Batterie 1 kein Strom mehr anliegt, kann die Steuereinrichtung 2, welche diesen Zustand durch das ständige Abfragen des Status der Primärstromversorgung 7 überwacht, einen Störfall erkennen. Hier muss nicht unterscheiden werden, ob es sich um einen Stromausfall oder ein gewolltes Abschalten durch den Hauptschalter handelt (siehe Schritt I). Das heißt, ausgehend von dem Start, dass die Maschine mit Strom versorgt wird, und dem Fall, dass die Primärstromversorgung entweder durch einen Stromausfall oder durch eine Spannungsschwankung wegfällt, erkennt die Steuereinrichtung 2 durch das Abfragen den aktuellen Zustand an der Primärstromversorgung 7 der Batterie 1 und sendet eine Anfrage an die PCs 3, ob diese noch aktiv sind und wartet dementsprechend auf eine Antwort (Schritt II). Mit anderen Worten wird im Schritt II der Zustand des/der PCs 3 abgefragt, um über das nachfolgende Verhalten der Steuereinrichtung 2 zu entscheiden.

Dahingehend gibt es nun zwei Möglichkeiten fortzufahren. Wenn die PCs nicht mehr antworten, geht die Steuervorrichtung 2 davon aus, dass es sich um ein gewolltes Abschalten (Deaktivieren) der PCs 3 handelt, bei dem die PCs 3 zuvor ordnungsgemäß abgeschaltet wurden. Anschließend kann somit die Steuereinrichtung 2 ebenfalls den Befehl zum sofortigen Deaktivieren der Batterie 1 und der Steuereinrichtung 2 aussenden (Schritt III).

Sollten die PCs 3 jedoch auf die Anfrage der Steuereinrichtung 2 mittels der Datenverbindung 5 antworten, geht die Steuereinrichtung 2 davon aus, dass die PCs 3 noch nicht abgeschaltet worden sind, und sich somit noch nicht in einem sicheren Zustand befinden. Ein möglicher Stromausfall beziehungsweise ein noch nicht vollständig abgeschlossener Vorgang des Deaktivieren oder Abschaltens kann hierbei die Ursache sein. Dies führt dazu, dass sowohl im Falle eines Stromausfalls als auch im Falle eines noch nicht abgeschlossenen Vorgangs des Deaktivierens oder Abschaltens des/der PCs 3, die Stromversorgung der PCs 3 noch mittels der Batterie 1 aufrechterhalten werden muss. Nur so kann ein Datenverlust beziehungsweise eine Zerstörung der PCs 3 aufgrund beispielsweise korrupter Festplattendaten verhindert werden.

Liegt also eine Antwort der PCs 3 vor, sendet die Steuereinrichtung 2 eine Meldung an alle angeschlossenen PCs 3, dass keine Eingangsspannung mehr an der Primärstromversorgung 7 anliegt und die Stromversorgung aktuell aus der Batterie stattfindet. Ferner gibt die Steuereinrichtung 2 einen Hinweis an die PCs 3 aus, dass die Daten auf den PCs 3 noch bis zu einem bestimmten Zeitpunkt gespeichert werden können, bevor die PCs 3 deaktiviert (abgeschaltet) werden. Dieser Schritt wird im Schritt IV in Figur 3 dargestellt.

Auch zu diesem Zeitpunkt prüft die Steuereinrichtung 2 ständig, ob die Primärstromversorgung 7 wiederhergestellt werden kann, so dass gegebenenfalls die Vorrichtung zur unterbrechungsfreien Stromversorgung in ihre ursprüngliche Arbeitsweise samt einer normalen Stromversorgung durch die Primärstromversorgung 7 zurückkehren kann und parallel dazu die Batterie wieder vollständig aufgeladen werden kann. Diese dauerhafte Überprüfung der Primärstromversorgung 7 wird in Schritt V in Figur 3 dargestellt.

Des Weiteren wird parallel dazu geprüft, ob die PCs 3 noch nicht abgeschaltet sind (vergleiche hierzu Schritt X). Sollte kein PC 3 mehr an die Steuereinrichtung über die Datenverbindung 5 antworten, wird der Befehl an die Batterie 1 gesendet, dass keine weitere Versorgung mehr notwendig ist, und dass sie bereits abschalten kann (vergleiche Schritt VI).

Wenn jedoch die an die PCs 3 übertragene Zeitdauer bis zum Abschalten ohne Eingabe eines Bedieners verstrichen ist und die PCs nach dieser Zeitdauer immer noch antworten, zum Beispiel in einem Fall, in dem der Bediener gerade nicht an der Maschine ist, um die PCs abzuschalten, sendet die Steuereinrichtung 2 einen Befehl zum Deaktivieren der PCs in Schritt VII des bespielhaft dargestellten Verfahrens.

Gleichzeitig sendet die Steuereinrichtung 2 einen Befehl an die Batterie 1, dass sie nach einer vorbestimmten weiteren Zeit X in Schritt VII abschalten soll, wobei die Zeit X so hoch gewählt ist, dass die PCs 3 ausreichend Zeit zum Deaktivieren (Abschalten) haben. Auch in diesem Schritt wird der Zustand der PCs 3 ständig überprüft, bis keiner dieser PCs 3 mehr antwortet (vergleiche hierzu Schritt VIII). Ist dies der Fall, und alle PCs 3 sind somit korrekt abgeschaltet (deaktiviert) worden und befinden sich somit in einem sicheren Zustand, gibt die Steuereinrichtung 2 ebenfalls einen Befehl an die Batterie 1 sofort zu deaktivieren (siehe hierzu Schritt III).

In einem letzten Schritt des Verfahrens schaltet somit auch die Steuereinrichtung 2 ab und wartet bis die Eingangsspannung an der Primärstromversorgung 7 wieder anliegt. Durch eine wiederkehrende Primärstromversorgung 7 wird die Steuereinrichtung 2, sowie das System der verbleibenden Elemente ebenfalls wieder mit Strom versorgt und eine sichere Überwachung aller PCs 3 und der damit verbundenen Maschine wird sofort sichergestellt. Ferner ist es in der beispielhaften Ausführungsform möglich, dass wenn die Zeit X, welche die Steuereinrichtung 2 den PCs zum Abschalten gegeben hat, abgelaufen ist, die Steuereinrichtung 2 und die Batterie 1 ebenfalls abgeschaltet wird (Schritt IX) .

### Bezugszeichenliste

- 1: Batterie
- 2: Steuereinrichtung
- 3: PC (Maschinensteuerkomponente)
- 4: Datenverbindung
- 5: Datenverbindung
- 6: Stromversorgung
- 7: Primärstromversorgung
- 8: Hauptschalter

## Patentansprüche

1. Vorrichtung zur unterbrechungsfreien Stromversorgung, aufweisend:
eine Maschinensteuerkomponente (3), die mittels einer Primärstromversorgung (7) mit Strom versorgbar ist und eingerichtet ist, eine Maschine, insbesondere eine Bearbeitungsmaschine, zu steuern,
ein Strom-Speichermedium (1) zur Speicherung von Strom, welches mit der Maschinensteuerkomponente (3) verbunden ist,
**dadurch gekennzeichnet, dass**
eine Steuereinrichtung (2), die so ausgestaltet ist, dass sie die Stromversorgung der Maschinensteuerkomponente (3) kontinuierlich überwacht, im Falle einer erfassten Unterbrechung der Primärstromversorgung (7) die Maschinensteuerkomponente (3) mit Strom aus dem Strom-Speichermedium (1) versorgt.

2. Vorrichtung zur unterbrechungsfreien Stromversorgung gemäß Anspruch 1, wobei die Steuereinrichtung (2) so ausgestaltet ist, dass sie im Falle einer erfassten Unterbrechung der Primärstromversorgung (7) einen Betriebszustand der Maschinensteuerkomponente (3) überwacht und diese dem Betriebszustand entsprechend deaktiviert.

3. Vorrichtung zur unterbrechungsfreien Stromversorgung gemäß Anspruch 1 oder 2, wobei die Steuereinrichtung (2) intern oder extern an der Maschine vorgesehen ist.

4. Vorrichtung zur unterbrechungsfreien Stromversorgung gemäß einem der bisherigen Ansprüche, wobei die Verbindung und Überwachung zwischen der Steuereinrichtung (2) und der Maschinensteuerkomponente (3) der Maschine via USB und/oder einer Spannungsabfrage des USB und/oder mittels Ethernet und/oder über einen Dienst, der auf der Maschinensteuerkomponente (3) gespeichert ist, erfolgt.

5. Vorrichtung zur unterbrechungsfreien Stromversorgung gemäß einem der bisherigen Ansprüche, wobei die Maschinensteuerkomponente (3) PCs, Steuerungen und Sicherheitssteuerungen der Maschine aufweist.

6. Vorrichtung zur unterbrechungsfreien Stromversorgung gemäß einem der bisherigen Ansprüche, wobei die Maschinensteuerkomponente (3) zusätzlich ein Versorgungsnetz von Sensoren und/oder Antriebsreglern der Maschine aufweist.

7. Vorrichtung zur unterbrechungsfreien Stromversorgung gemäß einem der bisherigen Ansprüche, wobei die Steuereinrichtung (2) so ausgestaltet ist, dass sie eine Vielzahl von Maschinensteuerkomponenten (3) einer oder mehrerer Maschinen, steuert.

8. Vorrichtung zur unterbrechungsfreien Stromversorgung gemäß einem der bisherigen Ansprüche, wobei das Strom-Speichermedium (1) mit der Maschinensteuerkomponente (3) und der Maschine verbunden ist.

9. Bearbeitungsvorrichtung zur Durchführung einer Bearbeitung von Werkstücken die bevorzugt zumindest abschnittsweise aus Holz, Holzwerkstoffen, Kunststoff oder dergleichen bestehen, mit einer Vorrichtung zur unterbrechungsfreien Stromversorgung gemäß einem der bisherigen Ansprüche.

10. Verfahren zur unterbrechungsfreien Stromversorgung, mit den folgenden Schritten:
Überwachen einer Primärstromversorgung (7) einer Maschinensteuerkomponente (3), die eingerichtet ist, eine Maschine, insbesondere eine Bearbeitungsmaschine, zu steuern;
Versorgen der Maschinensteuerkomponente (3) mit Strom aus einem Strom-Speichermedium (1), falls beim Überwachen der Stromversorgung eine Störung erfasst wird;
Überprüfen eines Betriebszustand der Maschinensteuerkomponente (3), falls beim Überwachen der Primärstromversorgung (7) eine Störung erfasst wird;
Deaktivieren der Maschinensteuerkomponente (3), falls das Überprüfen des Betriebszustands der Maschinensteuerkomponente (3) ergibt, dass diese aktiv ist.

11. Verfahren zur unterbrechungsfreien Stromversorgung gemäß Anspruch 10, im Fall, dass das Überprüfen des Betriebszustands der Maschinensteuerkomponente (3) ergibt, dass diese aktiv ist, ferner mit den folgenden Schritten vor dem Schritt des Deaktivierens der Maschinensteuerkomponente (3) :
Aussenden eines Warnsignals an die Maschinensteuerkomponente (3);
Warten auf eine Antwort der Maschinensteuerkomponente (3) für eine vorbestimmte Zeitdauer;
Überprüfen des Betriebszustands der Maschinensteuerkomponente (3) nach Ablauf der vorbestimmten Zeitdauer ohne Antwort von der Maschinensteuerkomponente (3).
Deaktivieren der Maschinensteuerkomponente (3), falls das Überprüfen des Betriebszustands der Maschinensteuerkomponente (3) ergibt, dass diese aktiv ist.

12. Verfahren zur unterbrechungsfreien Stromversorgung gemäß Anspruch 10 oder 11, wobei nach dem Deaktivieren der Maschinensteuerkomponente (3), eine Steuervorrichtung (2), welche die vorstehenden Schritte steuert, deaktiviert wird.
